# EUROPEAN PATENT SPECIFICATION

(11) **EP 3 656 646 B1**
(45) Date of publication and mention of the grant of the patent: **14.09.2022**
(21) Application number: 19460060.7
(22) Date of filing: 20.11.2019
(51) Int. Cl.: B62B 9/10

(54) **CARRYCOT INCLUDING A CARRYCOT TIGHTENING ADJUSTMENT MECHANISM**
BABYTRAGETASCHE MIT EINEM MECHANISMUS ZUR EINSTELLUNG DER BABYTRAGETASCHENSPANNUNG
COUFFIN AVEC MÉCANISME DE RÉGLAGE DE SERRAGE DE COUFFIN

(30) Priority: 21.11.2018 PL 42785218
(43) Date of publication of application: 27.05.2020
(73) Proprietor: Przedsiebiorstwo Produkcyjno - Handlowe "ARO" KARON Spolka Jawna, 42-200 Czestochowa (PL)
(72) Inventor: Karon, Janusz, 42-200 Czestochowa (PL); Karon, Adam, 42-200 Czestochowa (PL)
(74) Representative: Korbela, Anna

(56) References cited:
- WO-A1-2008/028597
- DE-U1- 9 416 812
- FR-A- 1 114 621
- GB-A- 917 166
- PL-Y1- 67 318

## Description

The subject of this invention is a carrycot including a carrycot tightening adjustment mechanism that can be used in various types of perambulators.

In known carrycots which have soft side walls, the ends of the element which is bent in a shape similar to the shape of the letter "U" are hinged with the upper frame of the carrycot. When the user wants to unfold the carrycot and tighten it, he needs to expand it against the bottom of the carrycot using the lower part of the element bent into a shape similar to the shape of the letter "U". However, the invention provides for the attachment of the ends of the element which is bent in a shape similar to the shape of the letter "U" to the carrycot tightening adjustment mechanisms, which allow a simple adjustment of the depth of the hollows into which they are inserted.

There are various solutions known which are used for adjusting the tightening in perambulator carrycots, its folding, unfolding and tightening, and thus also enabling it to be stored more conveniently and transported more conveniently. There are also solutions known which enable assembling the structure of other elements of a perambulator.

Thus, for example, from the Polish description of the utility model Ru.69 339, filed for protection on 14 September 2015, there is a solution known as 'Baby pram carrycot tightener'. The subject of the utility model is a baby pram carrycot tightener, which has the shape of a slat. One part of the tightener being its extension has the shape of a double-sided wedge and is equipped with a pass-through longitudinal hole located on the longitudinal axis of the central part of the slat. At the apex of the wedge profile of the slat there is a hole for fixing it with the upper frame of the carrycot. However, along one of the longer sides of the slat there is a deep open groove. The slat is equipped with a pass-through hole located on the longitudinal axis of the central part of the slat.

From the Polish description of the utility model with the exclusive right number Ru.67 318, filed for protection on 21 November 2011, there is a solution known as a 'Coupling shaft'. The developed coupling shaft is designed to connect moving parts, e.g. in prams, swings or baby carriers that require an articulated coupling. The developed element consists of two arms, each of which is a closed profile finished on one side with an annular element which is closed on one side with a lid. Both annular elements adhere to each other and are rotatably connected. A characteristic feature of this solution is the fact that in each of the arms, inside the side surface of the closed profile, there is a longitudinal recess which passes through the annular element, continues and ends in the inner surface of the lid of a given arm, where there is a reinforcing element inserted in each of the longitudinal recesses, preferably made of metal. Changing the position of the ring-shaped elements and locking them in the right position is enabled by a set of interoperating elements which consists of a toothed wheel, spring and button. Inside the cut-out of the toothed wheel there is a reinforcing-stiffening spacer sleeve.

Also, from the Polish description of the utility model with the exclusive right number Ru.066001, filed for protection on 26 February 2010, there is a solution known as 'Foldable trolley connector'. The developed connector consists of a sheath pivotally connected to the tube of the trolley structure. Inside the cover there is a basic element connected rigidly with a pin to a fixed tube and rotatably to the tube and the movable tube. The tube inside the connector is finished with a guide and an abutment having a wedge-shaped notch and interoperating with the tendon, where the movable tube is finished with a handle. In addition, the guide is connected by a movable connection to the handle with at least one connecting guide slat. The wedging cut-out interoperates with the pin. In addition, the pin which was used is inserted into the wedge-shaped notch of the abutment and the surface guiding to the pin.

However, from the Polish invention application number P.409178, filed for protection on 13 August 2014, there is a solution known as 'Swivel connection'. The filed swivel connection consists of a two-position or four-position multi-tooth element arranged between the lower and the upper body which is equipped with toothed ring elements which are placed on a common axis. From the lower body and upper body extend respectively the lower and upper arm. The lower body has a lower seat in its inner part, in which it is possible to place the selected multi-tooth element. The lower seat has several lower teeth, it also has pairs of triple grooves and double grooves, which are located in spaces between the teeth. Similarly, the upper body has several upper teeth; it also has at least one pair of triple grooves, which are located in spaces between the teeth. The multi-tooth element placed between the lower body and the upper body has projections that exactly match the size and shape of all or part of the spaces between the teeth. The two opposite projections of each multi-tooth element have grooves corresponding to the grooves of the lower seat and the grooves in the upper body. The zone of universal grooves of the four-position multi-tooth element is compatible with both, triple grooves and double grooves. Releasing from the lower seat or the upper body of the multi-tooth element occurs after activation of the spring mechanism of a known design, while the coupling and mutual blocking of the indicated elements occurs after releasing the spring mechanism. Between the annular outer plane and the annular inner plane there is space for two possible positions of the optional lock. The pin situated in the upper seat allows only one position of the multi-tooth element in the upper seat. The swivel connection is equipped with a cover that is attached to the upper body.

From the German description of the utility model with the publication number DE9416812 U1, filed for protection on 19 October 1994, there is a solution known as a 'Hartan Kinderwagen'. The invention relates to a collapsible crate for a stroller having a frame comprising a base plate and an upper peripheral frame support, and clamping elements connecting it to the outer plate and the best washable inner liner. Each side wall consists of a lower side wall half and an upper side wall half connected to it by hinges, the upper side wall half being the lower side wall half in the illustrated embodiment. Example protrudes in an end portion, which prevents from the outset folding together with movement of the joint outward. In order to also prevent the inwardly desired folding in the upright position of use, locking devices are provided which, in the exemplary embodiment shown, are designed as sliding bolts. This slide latch is mounted on the upper side wall half and reaches through with a cranked handle bar a recess so that an actuation of the slide latch is possible through the washable inside rash. You can move the sliding bolt upwards into the unlocking position without the inner deflection, as in previous designs with clamps, must be removed.

Also, from the German description of the invention with the publication number WO2008/O28597A1, filed for protection on 2 September 2006, there is a solution known as 'Baby carrycot'. The invention relates to a carrycot for a baby, comprising a base and a peripheral wall extending upward from the base. The base has two base surface elements which have approximately the same size and which can be swiveled between an active position defining a common base surface and a folded-down storage position. Connecting elements extend upward from the two lateral edge sections of the base surface element, two U-shaped frame elements being connected thereto and being adjustable about a snap-in swiveling axis between a folded-down storage position and an active position in which they define the upper edge of the carrycot. The two connecting elements can be adjusted between an expanded position and a storage position which is closer to the base surface elements. A flexible wall surface element defining the wall of the carrycot is provided between the peripheral edge of the base and the two frame elements.

The abovementioned German applications concern foldable baby stroller carrycots. The solution DE9416812 U1 describes a sidewall folding mechanism comprising tensioning elements divided on the frame bracket and on the plate base, which are divided into two in a horizontal plane and hinge longitudinal side walls are formed, two of which, lying one on top of the other, can be folded inwards and locked in a vertical position during use by locking devices which are hingedly connected by a coupling joint. The developed solution allows the user to fold the walls of the carrycot ready-for-use. The developed mechanism does not apply to the pram production stage and possible changes in the tension of the outer material of the carrycot.

Whereas the solution WO2008/028597A1 presents the carrycot, the base of which divides into two elements which are approximately the same size and which has two frame members in the shape of the letter "U" connected and adjustable around a snap-in axis of rotation, and a side wall between the base and two U-shaped frame elements is flexible. This solution allows the user to fold the carrycot in half. The developed mechanism does not apply to the pram's production stage and possible changes in the tension of the outer material of the carrycot during the production stage but concerns its use.

The purpose of the invention is to develop a mechanism which, using simple technical means and light and small elements, will allow, above all, at the production stage, to adjust the tightening of the fabric on the carrycot, facilitate the process of connecting individual elements of the carrycot, and later will also enable its folding, facilitating its transport and storage. According to the invention this problem is solved by a carrycot as defined in claim 1.

The carrycot including a carrycot tightening adjustment mechanism has two elements hinged to each other at an opening angle ranging from 0° to 180°, one of which is a tightener attached to the upper frame of the carrycot, while the other is an arm, where discs of both elements adhere to each other - on the inside of them - one of adjacent elements has at least one protruding component in the form of a safety tooth, while the other has at least one concave component corresponding to it in the form of a recess. The essence of this solution is that a longitudinal hollow is made in the arm for placing the end of the appropriately bent, movable element, which has a shape similar to the shape of the letter "U" and which is blocked against the bottom of the carrycot, usually in the form of a rod. In the arm there are passing bore chambers made successively on its both longer and wider sides and in one hole is placed a lock, which holes have the form of holes passing into the central hollow.

Preferably, the lock is a rectangular block corresponding to the shape of the opening and is pressed into it or hooked, or glued.

Usually, an indentation is made in the lock.

Preferably, the holes are arranged alternately along the longer and wider sides of the arm, i.e. the hole on one side of the arm is positioned at a height corresponding to the distance between the two holes on the opposite side of the arm, and the hole on the opposite side of the arm is located similarly.

The invention allows the adjustment of tightening of the perambulator carrycot at the stage of its production using uncomplicated, small elements of low weight. The mechanism allows easy adjustment of folds being formed in the event of insufficient tightening of the sides of the carrycot upholstery, as well as adjustment of too strong tightening of the fabric covering the carrycot, which greatly improves the production process of the perambulator.

An advantage of the invention is also the fact that later, during the use of the carrycot, its folding and unfolding with the use of the carrycot tightening adjustment mechanism does not require using of a lot of force.

The subject of the invention has been further described and exemplified by the drawings, in which:

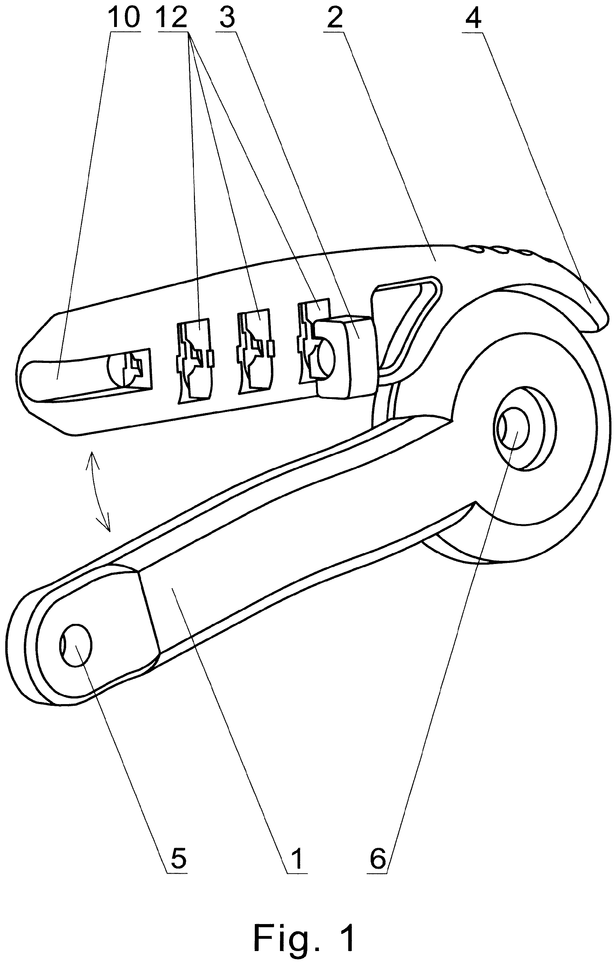

fig.1 - shows a perspective view of the folding or possibly, unfolding carrycot tightening adjustment mechanism with a lock ready to be inserted,
fig.2 - also shows a perspective view of the folding or possibly, unfolding carrycot tightening adjustment mechanism except that it is shown from another side and also with a lock ready to be inserted, which is shown next to it,

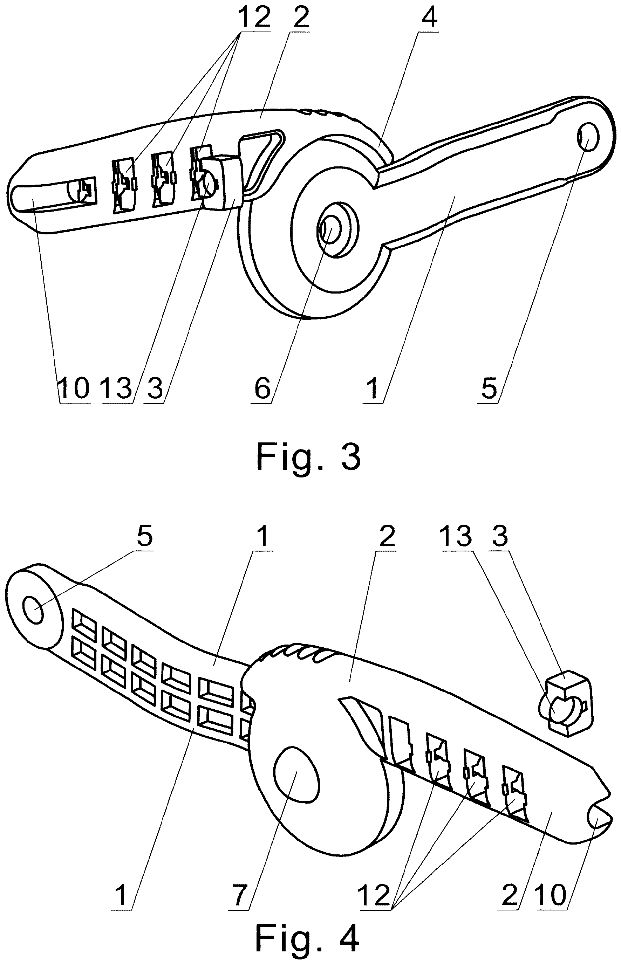

fig.3 - shows a perspective view of the unfolded carrycot tightening adjustment mechanism, where the two main components of the mechanism are set in the open position at 180°,
fig.4 - also shows a perspective view of the unfolded carrycot tightening adjustment mechanism, where the two main elements of the mechanism are set in the open position at 180°, but it is shown from another side and with a lock ready to be inserted, which is shown next to it,

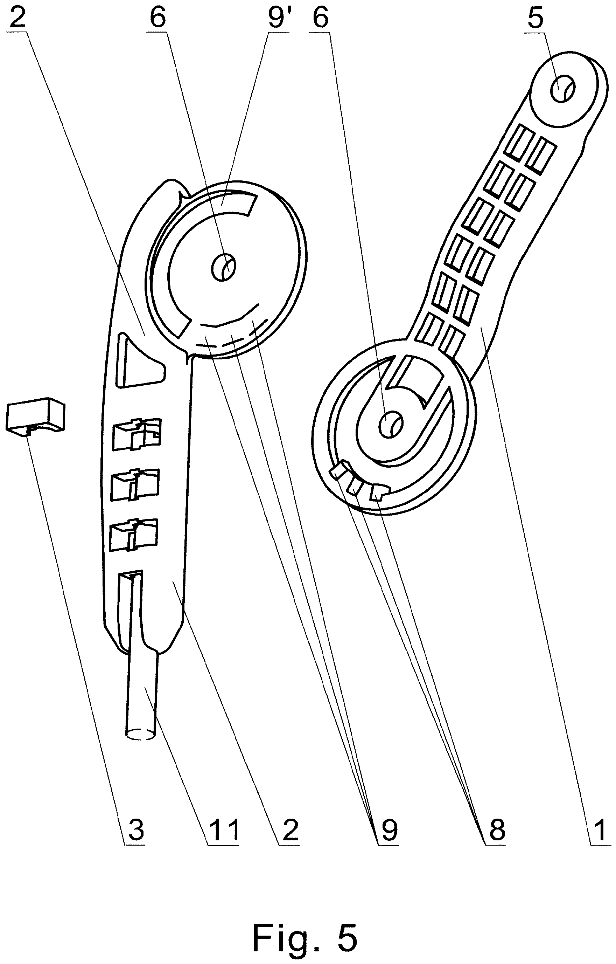

fig.5 - shows a perspective view of the dismantled components of the carrycot tightening adjustment mechanism, whereas

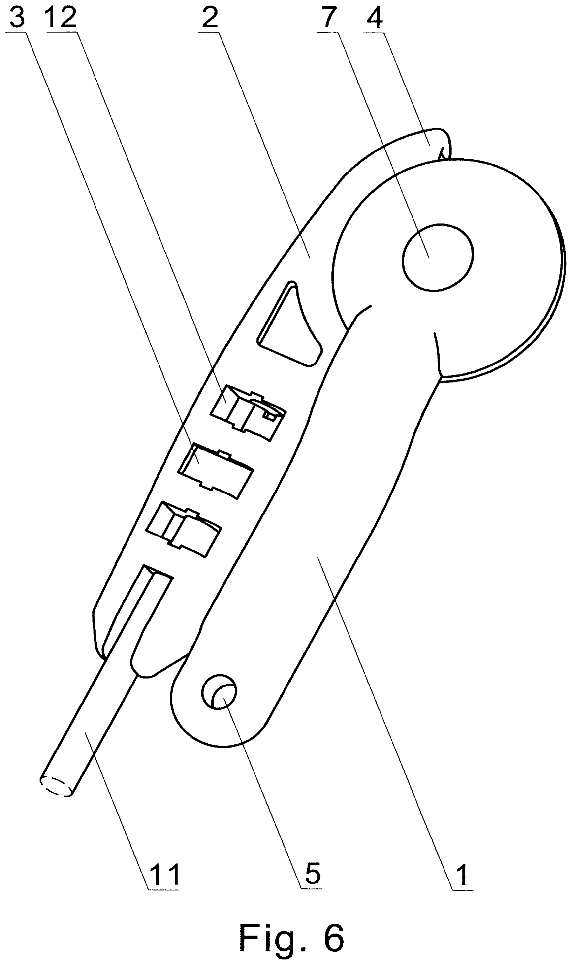

fig.6 - shows a perspective view of the assembled carrycot tightening adjustment mechanism where the two main components of the mechanism are set in the open position at 0°,

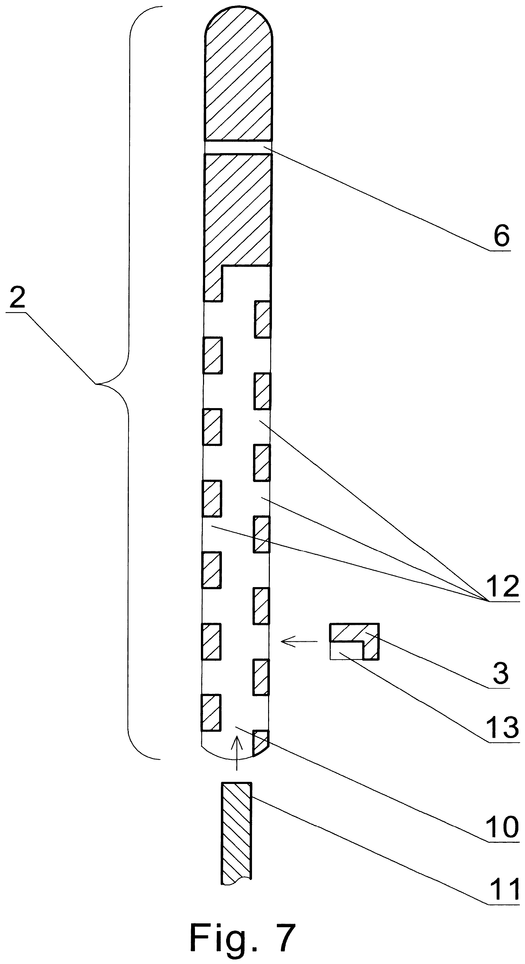

fig.7 - shows the longitudinal section running through the arm of the carrycot tightening adjustment mechanism with the lock cross-section shown from the side,
fig.8 - shows the carrycot tightening adjustment mechanism which tightens the sides of the carrycot, whereas
fig.9 - shows the carrycot tightening adjustment mechanism while folding and releasing the tightening on the sides of the gondola.

The carrycot includes, apart from the tightening adjustment mechanism, a rigid bottom, a rigid frame in the upper part of the carrycot, as well as at least one element bent in a shape similar to the shape of the letter "U", which is folded and blocked against the bottom of the carrycot.

Whenever a user wants to unfold the carrycot and tighten it, he needs to expand it against the bottom of the carrycot using the lower part of the element bent into a shape similar to the shape of the letter "U".

At the same time, both, the original assembly and the subsequent use of the carrycot, are improved by a pair of carrycot tightening adjustment mechanisms, which are placed at both ends of the element bent in a shape similar to the shape of the letter "U".

The adjustment mechanism consists essentially of three elements: tightener 1, arm 2 and lock 3.

Tightener 1 and arm 2 are hinged to each other. The shape of the hinge and the method of connecting tightener 1 and arm 2 allow these elements to be opened so that the angle between them ranges from 0° to 180°. The arched projection has a form of blocking thickening 4 which is made on arm 2 by locking itself on tightener 1 and preventing the wider opening of these elements. An analogous projection could alternatively be made on tightener 1 and would then lock itself on arm 2. In both cases, the projection could have any shape but the safest and thus the most advantageous is its round shape.

Folding of tightener 1 and arm 2 and setting them in the open position 0° is possible at the time of folding of the carrycot, and thus loosening the tightening of the carrycot and folding the supporting elements.

On the other hand, when tightener 1 and arm 2 are fully opened and are in the open position at 180°, the perambulator carrycot is fully unfolded and tightened.

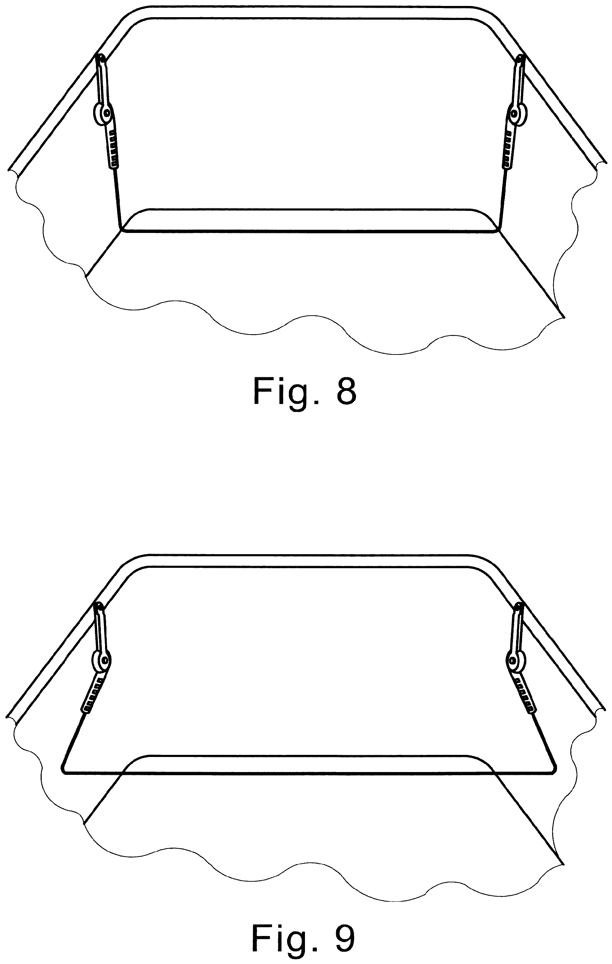

Tightener 1 is first attached to the upper frame of the carrycot (Fig. 8 and Fig. 9), preferably by means of a rivet or a screw or a similar element driven through connecting eye 5.

Tightener 1 is attached to the carrycot in such a way that it enables its oscillating movement around the axis of connecting eye 5 during the folding or unfolding of the carrycot tightening adjustment mechanism.

Whereas, the next element which is placed behind tightener 1 is arm 2 and is connected to it. Both, tightener 1 and arm 2 are specially shaped at the place of their rotary connection, In both cases, their outline at this point resembles circular discs in which coaxial, connecting hole 6 is placed which is hollow in its central part. Tightener 1 and arm 2 are connected with each other by means of connector 7 which is mounted in the axis of their rotation, preferably with a rivet or a screw. Connector 7 located in connecting hole 6 connects tightener 1 with arm 2.

In the place where the discs described above adhere to each other - on their inner side - one of the adjacent elements has a protruding component (or protruding components) in the form of safety tooth 8, and the other has a corresponding concave component (or concave components) in the form of protective recess 9.

Safety tooth 8 is a convex element in relation to the element on which it is located, i.e. in relation to tightener 1 disc or arm 2. Whereas, safety recess 9 is a concave element in relation to the element on which it is located, i.e. tightener 1 or arm 2.

These elements can be arranged in the opposite way, i.e. tooth 8 can be located in arm 2, and recess 9 can be located in tightener 1.

When tooth 8 goes into the recess 9, it locks in it and stiffens the coaxial, rotational movement of tightener 1 and the arm 2. Recess 9 is shaped so that the part thereof which runs in line with the radius of the element in which recess 9 is made (i.e. in line with the radius of the disc in arm 2 or the disc in tightener 1) is gentle and there is no sharp edge. This makes it easier to slide tooth 8 out of recess 9.

At the moment of rotation of tightener 1 in relation to arm 2, tooth 8 goes into recess 9 or into subsequent recesses 9 made in the disc of arm 2, depending on how they are arranged and how many of them were made.

Preferably, three teeth 8 are made in tightener 1 and respectively three recesses 9 are made in arm 2, which allow stabilization of the opening of tightener 1 in relation to arm 2 in three positions.

in addition, in the element in which recess 9 is made, i.e. usually arm 2 there is also a much larger, usually arcuate recess 9' made, in which tooth 8 (or teeth 8) is/are inserted and can move freely and in which it is not blocked (they are not blocked). In this case, the rotational movement of tightener 1 and arm 2 only limit significantly (more than in recess 9) the distant walls of recess 9', which also run substantially in accordance with the radii of tightener 1 discs and arm 2.

In the exemplary solution shown in the drawings, three safety teeth 8, at the moment the mechanism is set in the opening position at 180°, i.e. when the carrycot is fully unfolded and tightened, are inserted in three corresponding safety recesses 9. The rotation of tightener 1 in relation to arm 2 is blocked.

The rotational movement of these elements is also blocked at a slightly smaller opening angle whereas one or two safety teeth 8 are inserted into one or two corresponding safety recesses 9.

It results from the fact that safety tooth 8 and safety recess 9 are shaped in such a way that the shape of safety tooth 8 corresponds to the shape of safety recess 9 and in the opening position of the mechanism at 180°, i.e. when the carrycot is fully unfolded and tightened (and also in two additional positions of a slightly smaller opening) they protect the mechanism against folding to the opening position at 0°, i.e. folding of the carrycot.

At the other end of arm 2, i.e. at the bottom of the hinge, hollow 10 is made for placing the end of a movable element which is appropriately bent and resembles the shape of the shape of the letter "U" which corresponds to the shape of the carrycot and is blocked against its bottom, namely usually rod 11.

Arm 2 has, made successively in its both longer and wider sides, passing recesses, which are holes 12 connected to the central, longitudinal hollow 10 made therein.

In accordance with the invention, each of the both ends of the element bent into a shape similar to the shape of the letter "U", i.e. each end of rod 11 is inserted into the longitudinal hollow 10 in arm 2. Since arm 2 is hingedly connected to tightener 1 whose peripheral end is connected to the upper frame of the carrycot, the depth of the insertion of the ends of rod 11 into longitudinal hollow 10 in arm 2 determines the degree of tightening of the fabric wrapping the carrycot.

The possibility of choosing the depth at which each end of rod 11 is inserted into longitudinal hollow 10 was obtained by proper shaping of holes 12 and introducing the possibility of blocking them.

Alternating arrangement and preparation for blocking of holes 12 which pass each other, i.e. hole 12 located on one side of arm 2 is placed at a height corresponding to the distance between two holes 12 located on the opposite side of arm 2. Similarly, hole 12 located on the opposite side of arm 2 is placed at a height between two holes 12 located on the opposite side, i.e. the side of arm 2, which was described first.

In this structure it is important that the spacing between holes 12 is made in arm 2 which is connected to hollow 10 into which rod 11 is inserted.

In order to be able to insert rod 11 at the sufficient depth into hollow 10 in arm 2, it is blocked at a selected height due to the fact that hole 12 is filled and blocked. It is thus possible to choose the appropriate carrycot tightening.

Rod 11 is locked in longitudinal hollow 10 by means of lock 3, which can be a rectangular block corresponding to the shape of hole 12 to be blocked. Lock 3 fits exactly in hole 12 and is pressed into it, or hooked or glued. Lock 3 is placed in selected hole 12 already at the stage of production of the carrycot.

Lock 3 determines the available depth of hollow 10. The choice of hole 12 in which lock 3 will be placed depends on the length of rod 11 and the height of the sides of the carrycots covered with a fabric wrapping the carrycot. These parameters may differ depending on different types of carrycots and result mainly from different heights of carrycots. However, the need to place locks 3 at different heights also arises in the case of carrycots of the same type, when subsequent pieces of the same carrycot model due to technological inaccuracies slightly differ. Due to the adjustable tightening of the carrycot, the risk of mismatching the length of rod 11 to the expected fabric carrycot is excluded.

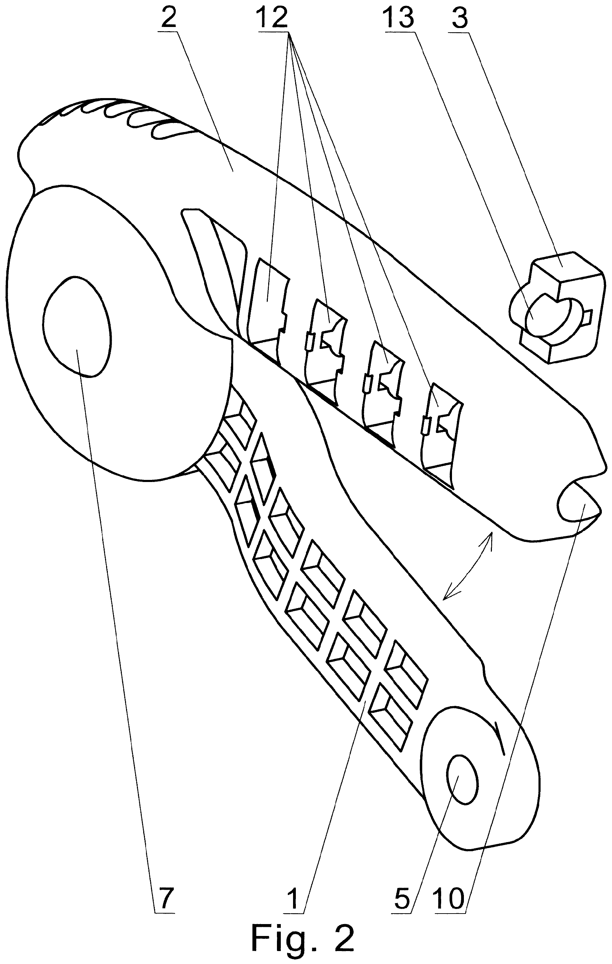

As explained, lock 3 used for blocking rod 11 is a block, however, indentation 13 can be additionally made therein. It is a kind of a cavity, e.g. cubic, cuboid or cylindrical (e.g. fig. 2).

It is then possible to select even more precisely the depth at which rod 11 is inserted into hollow 10. The cross-section of indentation 13 corresponds to the cross-section of hollow 10.

Lock 3 can be placed in hole 12 so that indentation 13 is directed towards rod 11 and then it can slide into a small space of indentation 13. Lock 3 can also be positioned so that indentation 13 is facing the opposite direction, i.e. towards tightener 1 and then inserted rod 11 will stop at the wall of lock 3 (without indentation 13), for which indentation 13 was made.

Carrycot tightening adjustment mechanisms are mounted to the carrycots in pairs on a given element bent into a shape similar to the shape of the letter "U". At the same time, at least one pair of mechanisms can be attached to the carrycot, at least on one side of the carrycot, as the user will independently assess the number of elements bent in the shape similar to the shape of the letter "U" that tighten the carrycot in which he wishes to use the mechanisms that facilitate assembly and use of the carrycot. Usually it will be an element around the child's head, sometimes also around the child's legs, sometimes both; it is also possible to use more elements bent in a shape similar to the shape of the letter "U" tightening the carrycot, which will be equipped with pairs of mechanisms.

In hollow 10 of two mechanisms attached respectively to the opposite, longitudinal, upper edges of the carrycot, there are two ends placed accordingly that are properly bent into the shape similar to the shape of the letter "U" of the element suited to the shape of the carrycot and tightening it, i.e. rod 11, which is blocked against the bottom of the carrycot.

In individual elements, for example tightener 1, the holes or hollows can be made that reduce the weight of the element and reduce the amount of material needed to manufacture the element (e.g. fig 2).

### List of elements:

- 1.: tightener,
- 2.: arm,
- 3.: lock,
- 4.: blocking thickening,
- 5.: eye (connecting),
- 6.: connecting hole,
- 7.: connector,
- 8.: tooth (safety, made in tightener 1),
- 9.: recesses (safety, made in arm 2),
- 10.: hollow,
- 11.: rod,
- 12.: hole (locked with lock 3),
- 13.: indentation (in lock 3).

## Claims

1. A carrycot including an upper frame, a bottom and a carrycot tightening adjustment mechanism, which has two elements (1, 2) hinged to each other with discs at the place of their rotary connection and with an opening angle ranging from 0° to 180°, one of which constitutes a tightener (1) attached to the upper frame of the carrycot, while the other is an arm (2), where the discs of both elements (1, 2) adhere to each other - on the inside of them - one of the adjacent elements (1) has at least one component protruding in the form of a safety tooth (8), while the other element (2) has at least one concave component corresponding to the safety tooth (8) in the form of a recess (9), **characterized in that** in the arm (2) a longitudinal hollow (10) is made in which is placed the end of a suitably bent movable element, which has a shape similar to the shape of the letter "U", which is blocked against the bottom of the carrycot, and which is a rod (11), and the arm (2) has passing recesses which are holes (12) successively made on both its longer and wider sides, wherein in one hole (12) is placed a lock (3), wherein the holes (12) pass into the central longitudinal hollow (10).

2. The carrycot including the carrycot tightening adjustment mechanism according to claim 1, **characterized in that** the lock (3) is a cuboidal body corresponding to the shape of the hole (12) and being pressed or hooked, or glued to it.

3. The carrycot including the carrycot tightening adjustment mechanism according to claim 2, **characterized in that** an indentation (13) is made in the lock (3).

4. The carrycot including the carrycot tightening adjustment mechanism according to claim 1 or 2, **characterized in that** the holes (12) are arranged alternately along the longer and wider sides of the arm (2), i.e. the hole (12) on one side of the arm (2) is placed at the height corresponding to the distance between two holes (12) on the opposite side of the arm (2) and the hole (12) on the opposite side of the arm (2) is placed similarly.

## Patentansprüche

1. Die Babytragetasche umfassend den oberen Rahmen, den Boden und den Mechanismus zur Einstellung der Babytragetaschenspannung, der zwei Elemente (1,2) aufweist -, die miteinander durch Scharniere klappbar mit den Scheiben an der Stelle ihrer Drehverbindung verbunden sind, mit einem Sprühwinkel von 0° bis 180°, - von denen eins ein Spanner (1) ist, der am oberen Rahmen der Babytragetasche befestigt wird, und das zweite dagegen bildet einen Arm (2), wobei an der Stelle, wo Scheiben der beiden Elemente (1, 2) aneinander anliegen - an derer Innenseite - das eine der angrenzenden Elemente (1) mindestens ein hervorragendes Teil in Form eines Sicherheitszahnes (8), und das zweite (2) mindestens ein konkaves dem Sicherheitszahn (8) entsprechendes Teil in Form einer Vertiefung (9) aufweist, **dadurch gekennzeichnet, dass** der Arm (2) einen Längshohlraum (10) besitzt, in dem sich ein geeignet gebogenes, bewegliches Element in einer Form ähnlich der des Buchstabens "U" befindet, das im Boden der Babytragetasche befestigt wird und das eine Stange (11) ist, und der Arm (2) vorbeigehende Aushöhlungen aufweist, die Form von in beiden längeren und breiteren Seiten gebohrten Öffnungen (12) haben, wobei in einer Öffnung (12) eine Verrieglung (3) angebracht ist, wobei die Öffnungen (12) in den zentralen Längshohlraum (10) übergehen.

2. Babytragetasche mit einem Mechanismus zur Einstellung der Babytragetaschenspannung nach Anspruch 1 **dadurch gekennzeichnet, dass** die Verriegelung (3) ein rechteckiger Körper ist, der der Form der Öffnung (12) entspricht und in diese hineingepresst oder mittels Haken eingehakt bzw. eingeklebt wird.

3. Babytragetasche mit einem Mechanismus zur Einstellung der Babytragetaschenspannung nach Anspruch 2 **dadurch gekennzeichnet, dass** in der Verriegelung (3) eine Vertiefung (13) ausgeführt ist.

4. Babytragetasche mit einem Mechanismus zur Einstellung der Babytragetaschenspannung nach Anspruch 1 oder 2 **dadurch gekennzeichnet, dass** die Öffnungen (12) abwechselnd entlang der längeren und breiteren Seiten des Arms (2) angeordnet sind, d. h. die Öffnung (12) auf einer Seite des Arms (2) befindet sich in einer Höhe, die dem Abstand zwischen den beiden Öffnungen (12) auf der gegenüberliegenden Seite des Arms (2) entspricht und ähnlicherweise ist die Öffnung (12) auf der gegenüberliegenden Seite des Arms (2) angeordnet.

## Revendications

1. Couffin comprenant un cadre supérieur, un fond et un mécanisme de réglage de serrage de couffin, présentant deux éléments (1, 2) reliés de manière articulée l'un à l'autre, avec des disques à l'endroit de leur connexion rotative, présentant un angle de rotation de 0° à 180°, dont l'un est un tendeur (1) fixé au cadre supérieur du couffin, et l'autre est un bras (2), tandis qu'au point où les disques de ces deux éléments (1, 2) sont adjacents l'un à l'autre - sur leur côté intérieur - l'un des éléments adjacents (1) présente au moins une pièce saillante sous la forme d'une dent d'arrêt (8), et l'autre élément (2) présente, en correspondance avec la dent d'arrêt (8), au moins un fragment concave en forme de renfoncement (9), **caractérisé en ce que** le bras (2) présente une cavité longitudinale (10) dans laquelle est placé l'extrémité d'un élément mobile cintré de manière appropriée, en forme similaire à celle de la lettre « U », qui est fixé dans le fond du couffin, et qui est une tige (11), et le bras (2) présente des renfoncements qui se croisent qui sont des ouvertures (12) pratiquées dans le bras (2) de manière alternée dans ses côtés les plus longs et les plus larges, l'une des ouvertures (12) étant munie d'un dispositif de verrouillage (3), les ouvertures (12) entrant en intersection avec la cavité longitudinale (10) axiale.

2. Couffin comprenant un mécanisme de réglage de serrage de couffin selon la revendication 1, **caractérisé en ce que** le dispositif de verrouillage (3) est un prisme rectangulaire droit, dont la forme est adaptée à la forme de l'ouverture (12), et étant pressé dans celle-ci ou accroché ou collé dans celle-ci.

3. Couffin comprenant un mécanisme de réglage de serrage de couffin selon la revendication 2, **caractérisé en ce qu'**une indentation (13) est réalisée dans le dispositif de verrouillage (3).

4. Couffin comprenant un mécanisme de réglage de serrage de couffin selon la revendication 1 ou 2, **caractérisé en ce que** les ouvertures (12) sont disposées alternativement le long des côtés les plus longs et les plus larges du bras (2), c'est-à-dire que l'ouverture (12) située sur un côté du bras (2) est positionnée à une hauteur correspondant à la distance entre les deux ouvertures (12) situées du côté opposé du bras (2) et l'ouverture (12) située sur le côté opposé du bras (2) est positionnée de manière similaire.
